# EUROPEAN PATENT APPLICATION

(11) **EP 2 287 264 A1**
(43) Date of publication of application: **23.02.2011**
(21) Application number: 09746450.7
(22) Date of filing: 08.04.2009
(51) Int. Cl.: C09J 7/02, B32B 27/00

(54) **ADHESIVE SHEET FOR PROTECTION OF COATING FILM**

(30) Priority: 14.05.2008 JP 2008126712
(71) Applicant: Nitto Denko Corporation, Ibaraki-shi, Osaka 567-8680 (JP)
(72) Inventor: UESUGI, Masanori, Ibaraki-shi Osaka 567-8680 (JP); SHIRAI, Mitsuyoshi, Ibaraki-shi Osaka 567-8680 (JP); KAI, Makoto, Ibaraki-shi Osaka 567-8680 (JP); SUZUKI, Hidenori, Ibaraki-shi Osaka 567-8680 (JP); IMOTO, Eiichi, Ibaraki-shi Osaka 567-8680 (JP)
(74) Representative: Albrecht, Thomas
(86) International application number: PCT/JP2009/057221
(87) International publication number: WO 2009/139243

(57) **Abstract**

[Problem] To provide an adhesive sheet for protecting coating films having excellent flexibility.

[Means for solving] The adhesive sheet for protecting coating films comprises an adhesive layer and a base layer provided with a composite film containing at least a urethane polymer, and the adhesive sheet has a 10% modulus at 20°C of 35 N/cm or less, and a 100% modulus at 20°C of 8 N/cm or more. A breaking strength of the adhesive sheet for protecting coating films is preferably 40 N/cm or more.

## Description

### TECHNICAL FIELD

The present invention relates to an adhesive sheet for protecting coating films having a base layer provided with a composite film containing at least a urethane polymer, and particularly to an adhesive sheet for protecting coating films having good flexibility.

### BACKGROUND ARTS

A composite film having an acrylic polymer and a urethane polymer has been known as a film having both high strength and high elongation at break, for example, in JP 2003-96140 A, JP 2003-171411 A, JP 2004-10662 A, and the like. The composite films have tough properties such as high strength and high elongation at break. However when trying to use it as a base material of an adhesive sheet for protecting coating surfaces such as coating film of automobiles, there was a problem that flexibility as a film (particularly, flexibility for convex and concave surface or curved surface in vinyl chloride sol coating portion) was not sufficient.

In JP 2001-520127 W, a multi-layered film comprising an interpenetrating polymer network layer (IPN layer), and at least one of an fluorine-containing polymer layer is disclosed as a film for protecting coating surfaces of automobiles and the like. The IPN layer in the multi-layered film is composed of an IPN composite of a urethane polymer and an acrylic polymer, and is manufactured by applying to a base material a mixture of an acrylic monomer, an acryl cross-linking agent, and a urethane cross-linked precursor of a polyol and polyisocyanate, polymerizing and cross-linking the acrylic monomer and the polyol/polyisocianate being the urethane precursor with heating in the manner of nonintervention.

According to this method, there is a merit that limitation (restriction) of types, combinations and blending proportions of the monomers to be used is difficult to be generated, but there is a problem in productivity because the urethane polymerization is a polyaddition reaction which proceeds slowly in comparison with such a chain reaction as the acryl.

In order to solve the problem as to productivity, when an IPN layer was tried to be obtained by utilizing the sequential synthesis and photopolymerization as disclosed in JP 2003-96140 A, the cross-linked urethane polymer became swelled in the presence of the acrylic monomer and the cross-linking agent to thereby increase a viscosity of the syrup remarkably, and accordingly, there arose a problem that application to a base material by coating or casting was very difficult.

Namely, an adhesive sheet for protecting coating films having flexibility as a film, particularly, flexibility for convex and concave surface or curved surface in vinyl chloride sol coating portion has not been provided and has been strongly desired.

### PRIOR PUBLICATIONS

### PATENT DOCUMENTS

Patent Document 1: JP 2003-96140 A
Patent Document 2: JP2003-171411 A
Patent Document 3: JP 2004-10661 A
Patent Document 4: JP 2001-520127 W

### DISCLOSURE OF THE INVENTION

### PROBLEM TO BE SOLVED BY THE INVENTION

The present invention has been made to solve the aforementioned problems, and an object of the present invention is to provide an adhesive sheet for protecting coating films, which has good flexibility.

### MEANS FOR SOLVING THE PROBLEM

The adhesive sheet for protecting coating films according to the present invention is an adhesive sheet which comprises an adhesive layer and a base layer provided with a composite film containing at least a urethane polymer, wherein the adhesive sheet has a 10% modulus at 20°C of 35 N/cm or less, and has a 100% modulus at 20°C of 8 N/cm or more.
The composite film is preferably one comprising a (meth)acrylic-based polymer and a urethane polymer.

Here, the adhesive sheet for protecting coating films preferably has a breaking strength of 40 N/cm or more.

Further, the adhesive sheet for protecting coating films preferably has a 10% modulus at 5°C of 80 N/cm or less.

Further, the base layer preferably has a surface coating layer containing fluorine or urethane on a surface being opposite to the surface where the adhesive layer is provided.

Another embodiment of the adhesive sheet for protecting coating films according to the present invention is an adhesive sheet which comprises an application sheet, an adhesive layer, and a base layer provided with a composite film containing at least a urethane polymer, wherein the adhiseive sheet has a 10% modulus at 20°C of 35 N/cm or less.
The composite film is preferably one comprising a (meth)acrylic-based polymer and a urethane polymer.

Here, the adhesive sheet preferably has a 10% modulus at 5°C of 80 N/cm or less.

Further, an adhesive strength between the application sheet and the base layer is preferably 6 N/25 mm or less.

Here, the base layer preferably has a surface coating layer containing fluorine or urethane on a surface being opposite to the surface where the adhesive layer is provided.

### EFFECTS OF THE INVENTION

According to the present invention, an adhesive sheet for protecting coating films having excellent flexibility can be achieved. The adhesive sheet for protecting coating films has flexibility for curved surface and flexibility for convex and concave surface in vinyl chloride sol coating portion.

### MODE FOR CARRYING OUT THE INVENTION

In the following, the present invention will be explained in detail.
The adhesive sheet for protecting coating films of the present invention has a base layer and an adhesive layer, and the base layer includes a composite film.

The composite film is a film containing at least a urethane polymer, and is a film of urethane polymer alone or a film further containing other polymers. In the present invention, the composite film preferably contains a (meth) acrylic-based polymer and a urethane polymer. In this case, in the composite film, it is preferable that a weight ratio of the (meth)acrylic-based polymer and the urethane polymer, i.e. the (meth)acrylic polymer / the urethane polymer is within the range of 1/99 to 80/20. When the content of the (meth) acrylic-based polymer is less than 1/99, there is a case where a viscosity of a precursor mixture increases to thereby make workability worse, and when more than 80/20, there is a case where flexibility and strength as a film can not be obtained.

In the present invention, it is preferable that the (meth)acrylic-based polymer is produced by using an acrylic component which contains at least a (meth)acrylic acid-based monomer, and a monofunctional (meth)acrylic-based monomer, particularly preferable that the (meth)acrylic-based polymer is produced by using a monofunctional (meth)acrylic-based monomer having a glass transition temperature (Tg) of its homopolymer of 0°C or more. Further in the present invention, it is preferable that the (meth) acrylic-based polymer is produced by using an acrylic component which further contains a monofunctional (meth)acrylic-based monomer having a glass transition temperature (Tg) of its homopolymer of less than 0°C.

In the present invention, the (meth)acrylic acid-based monomer is a (meth) acrylic-based monomer having carboxyl group, and is, for example, acrylic acid, methacrylic acid, maleic acid, crotonic acid, or the like. Among them, acrylic acid is most preferable. In the present invention, when the precursor of the composite film is one containing the (meth) acrylic-based monomer and the urethane polymer, a content of the aforementioned (meth)acrylic acid-based monomer is preferably 1% or more by weight and 15% or less by weight, and 2% or more by weight and 10% or less by weight in the precursor of the composite film. When the content of the (meth) acrylic acid-based monomer is less than 1% by weight, it takes a long time to react and it is very difficult to make a film, and there is a case where a problem that a strength of the resulting film is insufficient arises. When the content of the (meth)acrylic acid-based monomer is more than 15% by weight, water absorption of the resulting film becomes larger and there is a case where a problem arises in water resistance.
When the composite film contains the (meth)acrylic-based polymer and the urethane polymer, in the present invention, the (meth) acrylic acid-based monomer remarkably influences a compatibility with the urethane component and the acrylic component, and is the essential constituent having an extremely important function.
Meanwhile, in the present invention, the concept of "film" includes a sheet, and the concept of "sheet" includes a film. Further, in the present invention, the word " (meth) acryl" such as (meth) acrylic-based polymer or (meth)acrylic acid-based monomer is used as the general concept of methacryl and acryl . Further the word "acrylic" is used as the concept that includes methacrylic, unless there is a problem based on general common sense.

In the present invention, the monofunctional (meth) acrylic-based monomer having a Tg of 0°C or more includes, for example, acryloyl morpholine, isobornyl acrylate, dicyclopentanyl acrylate, t-butyl acrylate, cyclohexyl acrylate, lauryl acrylate, and the like. These can be used alone or in combination of two or more.

In the present invention, as the monofunctional (meth) acrylic-based monomer having a Tg of 0°C or more, it is preferable to use at least one selected from the group consisting of acryloyl morpholine, isobornyl acrylate and dicyclopentanyl acrylate, more preferable to use acryloyl morpholine and/or isobornyl acrylate, or acryloyl morpholine and/or dicyclopentanyl acrylate, and particularly preferable to use isobornyl acrylate.

The content of the monofunctional (meth)acrylic-based monomer having a Tg of 0°C or more in the acrylic component is preferably 20% or more by weight and 99 % or less by weight, and more preferably 30% or more by weight and 98% or less by weight. When the content of the monofunctional (meth) acrylic-based monomer is less than 20% by weight, there is a case where a problem that the strength of the film is insufficient arises, and when more than 99% by weight, there is a case where the film becomes too rigid to be fragile.

In the present invention, the monofunctional (meth)acrylic-based monomer having a Tg of less than 0°C includes, for example, n-butyl acrylate, 2-ethylhexyl acrylate, isooctyl acrylate, isobutyl acrylate, 2-methoxyethyl acrylate, tetrahydrofurfuryl acrylate, phenoxyethyl acrylate, ethoxyethyl acrylate,3-methoxybutyl acrylate, and the like. These may be used alone or in combination of two or more.
In the present invention, as the monofunctional (meth)acrylic-based monomer having a Tg of less than 0°C, it is most preferable to use n-butyl acrylate.

The monofunctional (meth)acrylic-based monomer having a Tg of less than 0°C may not be contained (content being 0% by weight). When contained, the content of the monofunctional (meth)acrylic-based monomer in the acrylic component is preferably more than 0% by weight and 50% or less by weight, more preferably more than 0% by weight and 45% or less by weight. When the content of the monofunctional (meth) acrylic-based monomer is more than 50% by weight, there is a case where a problem that a strength of the film is insufficient arises.

The (meth)acrylic-based monomer is optionally determined, with respect to its type, combination, amount to be used and the like, in consideration of compatibility with the urethane, polymerization activity at the time of photocuring by radioactive rays and the like, and properties of the high molecular weight compounds obtained.

Further, together with the (meth)acrylic-based monomers, monomers such as vinyl acetate, vinyl propionate, styrene, acrylamide, methacrylamide, mono- or diesters of maleic acid and derivatives thereof, N-methylolacrylamide, glycidyl acrylate, glycidyl methacrylate, N,N-dimethylaminoethyl acrylate, N,N-dimethylaminopropylmethacrylamide, 2-hydroxypropyl acrylate, N,N-dimethylacrylamide, N,N-diethylacrylamide, imide acrylate, N-vinylpyrrolidone, oligoester acrylate, e-caprolactone acrylate, dicyclopentanyl (meth)acrylate, dicyclopentenyl (meth)acrylate, methoxylated cyclododecatriene acrylate, and methoxyethyl acrylate may be copolymerized. The type and amount of the monomers to be copolymerized may be optionally determined in consideration of the properties and the like of the resulting composite film.

Further, the (meth)acrylic-based polymer may contain a polyfunctional monomer as far as the properties are not deteriorated. The polyfunctional monomer includes, for example, ethylene glycol di(meth)acrylate, propylene glycol di(meth)acrylate, hexanediol di(meth)acrylate, neopentyl glycol di(meth)acrylate, trimethylolpropane tri(meth)acrylate, pentaerythritol tri(meth)acrylate, dipentaerythritol hexa(meth)acrylate, urethane acrylate, epoxy acrylate, and polyester acrylate, and most preferable is trimethylolpropane tri(meth)acrylate.

The polyfunctional monomers can be contained in amounts of 1 part or more by weight and 20 parts or less by weight per 100 parts by weight of the acrylic-based monomer. When the content of the polyfunctional monomer is 1 part or more by weight, the cohesive force of the composite film is sufficient, and when it is 20 parts or less by weight, the elastic modulus of the polymer obtained does not increase too much, and thus the resulting composite film can follow up the irregularity of the surface of an adherend.

The urethane polymer is produced by causing a diol to react with a diisocyanate. A catalyst is used generally for the reaction of the hydroxyl group of the diol and the isocyanate. In the present invention, the reaction can be accelerated without using a catalyst which causes environmental burdens such as dibutyl tin dilaurate or tin octoate.

A low molecular weight polyol includes dihydric alcohols such as ethylene glycol, diethylene glycol, propylene glycol, butylene glycol, and hexamethylene glycol.

A high molecular weight diol includes ethylene oxide, propylene oxide, a polyether polyol obtained by addition polymerization of tetrahydrofuran or the like; or a polyester polyol composed of a polycondensation product of an alcohol such as the aforementioned dihydric alcohol, 1,4-butanediol, 1,6-hexanediol and a dibasic acid such as adipic acid, azelaic acid, or sebacic acid; an acrylic polyol; a carbonate polyol; an epoxy polyol; a caprolactone polyol; or the like. Among them, for example, polyoxytetramethylene glycol (PTMG), polyalkylene carbonate diol (PCD), and the like are preferably used.

The acrylic polyol includes a copolymer of a hydroxyl group-containing monomer and an acrylic-based monomer, or the like, in addition to a copolymer of a hydroxyl group-containing substance. The epoxy polyol includes an amine-modified epoxy resin, or the like.

In the present invention, the urethane polymer does not contain any cross-linked structure. The diol to be used for forming the urethane polymer is preferably a linear diol. As far as the condition that the requirement of not causing the urethane polymer to form any cross-linked structure is satisfied, the diol may be a diol having a side chain or a diol having a branched structure. Namely, the urethane polymer which constitutes the composite film according to the present invention does not contain any cross-linked structure, and thus is structurally completely different from the IPN structure.

In the present invention, the aforementioned diol can be used alone or in combinations of two or more in consideration of the solubility in the acrylic-based monomer, reactivity with isocyanate, and the like. When strength is required, it is effective to increase the amount of urethane hard segment by use of a low molecular weight diol. When importance is posed on elongation, it is preferable to use a diol having a large molecular weight alone. Furthermore, the polyether polyol generally is inexpensive and has good water resistance. The polyester polyol has high strength. In the present invention, the type and amount of the polyol can be selected freely depending on the application and purpose. The type, molecular weight, and amount of the polyol to be used may be selected appropriately also from the viewpoints of the property of the base material to be applied, reactivity with isocyanate, compatibility with the acrylic monomer, and the like.

As the diisocyanate, aromatic, aliphatic, or alicyclic diisocyanate, and a dimer, a trimer or the like of these diisocyanates may be used. The aromatic, aliphatic, and alicyclic diisocyanate includes, for example, tolylene diisocyanate, diphenylmethane diisocyanate, hexamethylene diisocyanate, xylylene diisocyanate, hydrogenated xylylene diisocyanate (HXDI), isophorone diisocyanate, hydrogenated diphenylmethane diisocyanate, 1,5-naphthylene diisocyanate, 1,3-phenylene diisocyanate, 1,4-phenylene diisocyanate, butane-1,4-diisocyanate, 2,2,4-trimethylhexamethylene diisocyanate, 2,4,4-trimethylhexamethylene diisocyanate, cyclohexane-1,4-diidocyanate, dicyclohexylmethane-4,4-diisocyanate, 1,3-bis(isocyanatomethyl)cyclohexane, methylcyclohexane diisocyanate, m-tetramethylxylylene diisocyanate, or the like. In addition, a dimmer, a trimer of these, or polyphenylmethane diisocyanate may be used. The trimer includes isocyanurate type, biuret type, allophanate type, or the like, and may be used appropriately.

These diisocyanates may be used alone or in combination. The type, combination and the like of the diisocyanate may be appropriately selected in consideration of the properties of the base materials to which the composite film or the like is applied (coated), the solubility in the acrylic-based monomer, the reactivity with hydroxyl group, and the like.

In the present invention, the urethane polymer is preferably formed from at least one diisocyanate selected from the group consisting of hexamethylene diisocyanate (HDI), hydrogenated tolylene diisocyanate (HTDI), hydrogenated 4,4-diphenylmethane diisocyanate (HMDI), isophorone diisocyanate (IPDI), and hydrogenaed xylylene diisocyanate (HXDI).

In the present invention, with respect to the use amounts of the diol component and the diisocyanate component used for forming the urethane polymer, an amount of the diol component to be used relative to the diisocyanate component is that an NCO/OH ratio (equivalent ratio) is preferably 1.1 or more and 2.0 or less, more preferably 1.15 or more and 1. 35 or less. When the NCO/OH (equivalent ratio) is less than 1.1, strength of the film is easy to be lowered. When the NCO/OH (equivalent ratio) is 2.0 or less, it is possible to obtain sufficient elongation and flexibility.

To the urethane polymer, a hydroxyl-containing acrylic monomer may be added. By adding the hydroxyl-containing acrylic monomer, (meth)acryloyl group can be introduced at the end of the molecule of the urethane prepolymer to be provided with copolymerizable property with the acrylic-based monomer, and to increase compatibility between the urethane component and the acrylic component, which results in the improvement of a S-S property such as the breaking strength. The hydroxyl-containing acrylic monomer used herein includes hydroxyethyl (meth)acrylate, hydroxypropyl (meth)acrylate, hydroxybutyl (meth)acrylate, hydroxyhexyl (meth) acrylate, or the like. The amount of the hydroxyl-containing acrylic monomer to be used relative to 100 parts by weight of the urethane polymer is preferably 0.1 to 10 parts by weight, more preferably 1 to 5 parts by weight.

In the present invention, the composite film can contain commonly used additives, for example, ultraviolet absorbents, antioxidants, fillers, pigments, colorants, flame retardants, antistatic agents, light stabilizer as necessary as far as the effects of the present invention are not deteriorated. These additives are used at normal amounts depending on their type. These additives may be added in advance prior to the polymerization reaction of the diisocyanate and the diol. Alternatively, they may be added prior to polymerization of the urethane polymer and the acrylic-based monomer, each.

According to the present invention, to adjust the viscosity at the time of coating, a small amount of a solvent may be added. The solvent can be selected appropriately from commonly used solvents. Examples of such a solvent include ethyl acetate, toluene, chloroform, dimethylformamide, and the like.

In case where the composite film in the present invention is one containing the (meth)acrylic-based polymer and the urethane polymer, the composite film can be formed by using the acrylic monomer as a diluent, causing a diol to react with an diisocyanate in the acrylic-based monomer to form a urethane polymer, coating a mixture containing the acrylic-based monomer and the urethane polymer as main components on a base material (if necessary, peeling-treatment may be performed) or the like, and then irradiating the coated mixture with, for example, ionizing radioactive ray such as α-ray, β-ray, γ-ray, neutron beam, or electron beam, radioactive ray such as ultraviolet ray, or visible light depending on the type of a photopolymerization initiator to be used, for curing, and then peeling off and removing the base material. Alternatively, without peeling off and removing the base material, the composite film can be obtained in the form of lamination on the base material.

Specifically, after the diol is dissolved in the acrylic-based monomer, a diisocyanate or the like is added to allow it to react with the diol to adjust the viscosity, and the mixture is coated, for example, on the base material, or peeling-treated surface of the base material, if necessary, and then curing the coating by using a low-pressure mercury lamp or the like to thereby provide the composite film. In this method, the acrylic-based monomer may be added at one time during the urethane synthesis or in several times dividedly. Alternatively, the diisocyanate is dissolved in the acrylic-based monomer, which may be then caused to react with the diol. According to this method, the molecular weight is not limited and polyurethanes having high molecular weight can be produced. Therefore, the molecular weight of the polyurethane finally obtained can be designed to a desired size.

In this case, to avoid inhibition of polymerization by oxygen, a peeling-treated sheet (separator, or the like) may be placed on the mixture applied to the base material or the like to thereby shut out oxygen, or, the base material may be placed in a vessel filled with an inert gas to thereby lower the concentration of oxygen.

In the present invention, the type of radioactive rays and the like and the type of the lamps to be used for irradiation may be selected appropriately, and low pressure lamps such as a fluorescent chemical lamp, a black light, and a bactericidal lamp as well as high pressure lamps such as a metal halide lamp and a high pressure mercury lamp can be used.

The dose of ultraviolet or the like may be set up optionally depending on the characteristics required for the film. Generally, the dose of ultraviolet ray is selected within the range of 100 to 5,000 mJ/cm², preferably 1,000 to 4, 000 mJ/cm², and more preferably 2,000 to 3,000 mJ/cm² . When the dose of ultraviolet ray is less than 100 mJ/cm², there is a case where sufficient degree of polymerization may not be obtained, and when more than 5,000 mJ/cm² there is a case where deterioration occurs.

Further, the temperature at the time of irradiation of ultraviolet rays is not particularly limited and can be set up optionally. However, when the temperature is too high, termination reaction tends to occur due to the polymerization heat and thus cause lowering of performances. Usually, the temperature is 70°C or less, preferably 50°C or less, and more preferably 30°C or less.

In the present invention, the mixture containing at least the urethane polymer (for example, mixture containing the urethane polymer and the acrylic-based monomer as main components) contains a photopolymerization initiator. Preferred photopolymerization initiators include, a benzoin ether such as benzoin methyl ether or benzoin isopropyl ether, a substituted benzoin ether such as anisole methyl ether, a substituted acetophenone such as 2,2-diethoxyacetophenone or 2,2-dimethoxy-2-phenylacetophenone, a substituted α-ketol such as 1-hydroxy-cyclohexyl-phenyl-ketone or 2-methyl-2-hydroxypropiophenone, an aromatic sulfonylchloride such as 2-naphthalenesulfonylchloride, a photoactive oxime such as 1-phenyl-1,1-propanedione-2-(o-ethoxycarbonyl)-oxime, and the like.

The thickness of the base layer according to the present invention can be appropriately selected depending to the objects and the like, for instance, the kind and portion of the subject to be coated and protected. The thickness is not particularly limited, and is preferably 100 µm or more, more preferably 150 µm or more, most preferably 200 µm or more. The thickness of the base layer is preferably 1,000 µm or less, more preferably 750 µm or less, particularly preferably 500 µm or less. The thickness of the composite film constituting the base layer, for example, in a case of chipping application to be used for protecting bodies of automobiles, preferably about 50 to 500 µm, more preferably about 100 to 300 µm.

The adhesive sheet for protecting coating films according to the first embodiment of the present invention is composed of the base layer containing the composite film and the adhesive layer. Namely, the base layer has the adhesive layer on one surface or the both surfaces. The adhesive which forms the adhesive layer is not particularly limited and there can be used a general adhesive including acrylic-based, rubber-based, or silicone-based adhesive. Preferable is an acrylic-based adhesive in view of adhesion property at a low temperature, holding property at a high temperature, cost performance, and the like. The method for forming the adhesive is not particularly limited, and there can be employed a method in which a solvent-based or emulsion-based adhesive is applied to the base material, and then dried, a method in which a adhesive layer is previously formed by applying the adhesive to a releasing paper, and then the adhesive layer is laminated to the composite film, and the like. There can also be employed a method in which a radioactive curable adhesive is applied to the base material, and then both of the adhesive layer and the film are irradiated with a radioactive ray to cure the base material and the adhesive layer simultaneously to thereby form the adhesive layer. Meanwhile, in such a case, the adhesive layer and the base layer are applied so as to form a multilayered structure.

The thickness of the adhesive layer is not particularly limited, and may be set optionally. Usually, the thickness is preferably 20 µm or more, more preferably 30 µm or more, particularly preferably 40 µm or more. However, usually, the upper limit is preferably about 100 µm.

In the base layer which constitutes the adhesive sheet for protecting coating films according to the present invention, within the range not diminishing the effect of the present invention such as flexibility, a surface coating layer may be provided on one surface of the composite film. The surface coating layer preferably is one which contains fluorine or urethane in view of weather resistance and flexibility, and the like. Foe example, it is preferable to provide a fluoroethylene vinyl ether layer as the surface coating layer. By being provided with the surface coating layer, it is possible to impart glossiness, abrasion resistance, stain resistance, water repellency, and the like to the layer, and also there is an effect of inhibiting degradation of the composite film itself. When the base layer has the surface coating layer, the structure in which the composite film has the surface coating layer on one surface, and has the adhesive layer on the other surface is preferable.

The thickness of the coating layer is preferably 2 µm to 50 µm, more preferably 5 µm to 40 µm, further preferably 8 µm to 30 µm. When the thickness of the coating layer is less than 2 µm, there is a case where defect portions where the coating layer is not formed such as pin holes are easy to be generated, and the properties of the coating layer are not exhibited sufficiently. When the thickness is more than 50 µm, there is a case where the physical properties of the coating layer cause the physical properties of the composite film to be lowered.

In the base layer according to the present invention, within the range not diminishing the effects of the present invention such as flexibility, one or both surfaces of the composite film can be laminated with other films. The materials forming other films include, for example, a polyester-based resin such as polyethylene terephthalate (PET), a polyolefin-based resin such as polyethylene (PE) or polypropylene (PP), a thermoplastic resin such as polyimide (PI), polyether ether ketone (PEEK), polyvinylchloride (PVC), polyvinylidene chloride resin, polyamide-based resin, polyurethane-based resin, polystyrene-based resin, acryl-based resin, fluorine-based resin, cellulose-based resin or polycarbonate-based resin, and in addition, a thermosetting resin, and the like. When being provided with the aforementioned coating layer, it is preferable that the coating layer is positioned as the outermost layer of the base layer.

In the adhesive sheet for protecting coating films according to the present invention composed of the base layer and the adhesive layer, a 10% modulus at 20°C is required to be 35 N/cm or less, preferably 30 N/cm or less, and further preferably 25 N/cm or less. The 10% modulus at 20°C of the adhesive sheet is preferably 3 N/cm or more, and further preferably 5 N/cm or more. When the 10% modulus at 20°C of the adhesive sheet is more than 35 N/cm, the adhesion property for convex and concave surface in vinyl chloride sol coating portion and for curved portion becomes lowered.

When lamination work of the adhesive sheet is conducted in low temperature places such as outdoors, it is preferable to consider a modulus at low temperature. For example, at a temperature of 5°C, due to the increase in cohesive force of the adhesive layer, a value of modulus to be aimed is different. In the present invention, a 10% modulus at 5°C of the adhesive sheet for protecting coating films is preferably 80 N/cm or less, more preferably 70 N/cm or less, and particularly preferably 60 N/cm or less. However, the 10% modulus at 5°C is preferably 3 N/cm or more, and more preferably 5 N/cm or more. When the 10% modulus at 5°C of the adhesive sheet for protecting coating films is 80 N/cm or less, workability at a low temperature, adhesion property to concave and convex surface, and the like are good.

In the adhesive sheet for protecting coating films according to the present invention composed of the base layer and the adhesive layer, a 100% modulus at 20°C is required to be 8 N/cm or more, preferably 10 N/cm or more, further preferably 12 N/cm or more. The 100% modulus at 20°C of the adhesive sheet is preferably 250 N/cm or less, further preferably 200 N/cm or less. Because the aforementioned adhesive sheet for protecting coating films easily deforms at a 100% modulus of less than 8 N/cm, disadvantages tend to be generated that position displacement at the time of lamination work occurs, and that the adhesive sheet cannot be used anymore due to deformation at the time of re-lamination. In case of the embodiment mentioned hereinafter where an application sheet is provided, when the 10% modulus is 35 N/cm or less, the 100% modulus is not particularly limited.

In the adhesive sheet for protecting coating films according to the present invention composed of the base material and the adhesive layer, a breaking strength is preferably 40 N/cm or more, further preferably 50 N/cm or more, particularly preferably 60 N/cm or more. However, generally, the breaking strength is 300 N/cm or less, and further preferably 250 N/cm or less. According to the aforementioned adhesive sheet for protecting coating films, when the breaking strength is less than 40 N/cm, there is a case where undesired cutting of the adhesive sheet occurs.

The adhesive sheet for protecting coating films according to the present invention composed of the base layer and the adhesive layer preferably has a predetermined adhesive strength. For example, an adhesive strength to an acrylic plate is required to be 3 N/cm or more, preferably 5 N/cm or more, further preferably 6 N/cm or more, and particularly preferably 7 N/cm or more. Generally, the adhesive strength is preferable 100 N/cm or less, and further preferably 70 N/cm or less. When the adhesive strength of the adhesive sheet for protecting coating films to the acryl plate is 5 N/cm or more, lamination can be achieved by exhibiting sufficient adhesion property to convex and concave surface in vinyl chloride sol coating portion and to curved portion even in a low temperature environment. When the adhesion strength is too strong, position displacement occurs, and re-lamination becomes difficult at the time of contamination by dusts or air babbles.

The other embodiment of the adhesive sheet for protecting coating films of the present invention has an application sheet in addition to the aforementioned base layer and the adhesive layer. The application sheet may be used for improving lamination workability of the adhesive sheet for protecting coating films, for example, work to position the laminating point, and the like. The application sheet is laminated on the surface being opposite to the surface where the adhesive layer is provided. In the embodiment in which the base layer contains the surface coating layer, the application sheet is laminated on the surface coating layer.

The application sheet used in the present invention includes, for example, adhesive sheets produced by applying a rubber-based adhesive agent, an acrylic-based adhesive agent, or the like to a film made of an olefin-based resin such as polypropylene (PP) or polyethylene (PE); a vinyl chloride resin; a polyester-based resin, or the like. Though a commercially available application sheet may be used, the 10% modulus at 20°C of the adhesive sheet for protecting coating films is required to be controlled so as to be 35 N/cm or less.

The 10% modulus at 5°C of the adhesive sheet for protecting coating films is the same as that of the aforementioned adhesive sheet for protecting coating films without the application sheet, and is preferably 80 N/cm or less, more preferably 70 N/cm or less, and particularly preferably 60 N/cm or less. However, the 10% modulus at 5°C of the adhesive sheet is preferably 3 N/cm or more, and further preferably 5 N/cm or more.

According to the adhesive sheet for protecting coating films of the present invention composed of the base layer, the adhesive layer and the application sheet, the adhesive strength between the application sheet and the base layer is preferably 6 N/25 mm or less, more preferably 4.5 N/25 mm or less, and particularly preferably 3 N/25 mm or less. The adhesive strength is preferably 0.1 N/25 mm or more, more preferably 0.2 N/25 mm or more. When the adhesive strength between the application sheet and the base layer is larger than 6 N/25 mm, at the time when peeling off the application sheet after the adhesive sheet for protecting coating films is laminated on a predetermined position of an article to be adhered, there is a case where the adhesive sheet floats from the article to be adhered. When the adhesive strength is less than 0.1 N/25 mm, there is a case where floating occurs before lamination. The adhesive strength of the adhesive sheet for protecting coating films to the acryl plate is preferably 5 N/cm or more, further preferably 6 N/cm or more, and particularly preferably 7 N/cm or more. When the adhesion strength is less than 5 N/cm, there is a case where adhesion to convex and concave surface in vinyl chloride sol coating portion and to curved portion cannot be sufficiently carried out in low temperature lamination, or there is a case where the adhesive sheet floats from the article to be adhered when the application sheet is peeled off.

The production method of the adhesive sheet for protecting coating films composed of the base layer and the adhesive layer according to the present invention will be explained hereinafter. For example, first, the coating solution for composite films is applied to the peeling-treated surface of the peeling-treated polyethylene terephthalate film (temporary support 1) and, after a clear separator is put thereon, irradiation of ultraviolet ray or the like is carried out from upper side of the separator so as to form the composite film. Thereafter, the separator is removed. Separately, the coating solution for adhesive layers is applied to the peeling-treated surface of the peeling-treated polyester film (temporary support 2) to form the adhesive layer. After that, the adhesive layer is laminated to the composite film to obtain the adhesive sheet for protecting coating films composed of the base layer and the adhesive layer. Though this layer construction is the peeling-treated polyethylene terephthalate film (temporary support 1) / the composite film / the adhesive layer / the peeling-treated polyester film (temporary support 2), the temporary support 1 and the temporary support 2 are not particularly included in the elements of the adhesive sheet for protecting coating films according to the present invention, because they are peeled off when used, that is, when the adhesive sheet is used for adherence. However, if necessary, it is possible to provide the temporary support 1, the temporary support 2, and the like appropriately, and thus the technical scope according to the present invention includes these constructions.

In case where the base layer according to the present invention contains the surface coating layer, during the formation of the base layer in the aforementioned production method, the composite film is formed by applying the coating solution for the surface coating layer on the temporary support 1 to form the surface coating layer, applying the coating solution for the composite film thereon, and putting the separator and the like thereon.

The adhesive sheet for protecting coating films of the present invention composed of the base layer, the adhesive layer and the application sheet can be manufactured by producing the adhesive sheet composed of the base layer and the adhesive layer according to the aforementioned method, peeling off the temporary support 1 which temporarily adhered to the base layer, and laminating the application sheet on the peeled-off surface. In addition, when the base layer is composed of the composite film only, the application sheet is laminated on the composite film, and when the base material contains the surface coating layer, the application sheet is laminated on the surface coating layer.

According to the adhesive sheet for protecting coating films of the present invention, high breaking strength and high elongation at break can be both established, and is excellent in flexibility for curved surface, and the adhesive sheet has excellent flexibility for convex and concave surface in vinyl chloride sol coating portion. Further, the adhesive sheet has good adhesion property. Accordingly, the adhesive sheet is suitable for protecting the coating surfaces of automobiles, airplanes, and the like. For example, the adhesive sheet for protecting coating films can be used by laminating on articles to be laminated such as coating surface of automobiles and buildings.

### EXAMPLES

The present invention will be explained in detail by Examples in the following, but the invention is not to be limited thereto. In the following Examples, unless otherwise noted, within the technical common sense, part means part by weight, % means % by weight. The measuring methods and evaluation methods used in the following Examples are shown below.

### (Measuring methods and Evaluation methods)

### (1) Measurement of modulus and measurement of breaking strength

### i) 10% Modulus

The adhesive sheet composed of the base layer and the adhesive layer, or the adhesive sheet composed of the base layer, the adhesive layer and the application sheet was cut, in a state of the temporary supports being adhered, to a piece of 1 cm width and 13 cm length, and then the temporary support 1 and the temporary support 2 were peeled off. The piece was subjected to tensile test by using a tensile tester "AUTOGRAPH ASG-50D Type" (manufactured by SHIMADZU CORPORATION) under a tensile speed of 200 mm/min., distance between chucks of 50mm, room temperature (20°C) to obtain a stress-strain curve. A stress per unit area at 10% elongation of the adhesive sheet was set to be 10% modulus at 20°C (RT-10% modulus). For confirmation, it should be noted that in case where the adhesive sheet contains the application sheet, the measurement was carried out in a state of the application sheet being still adhered.
With respect to the 10% modulus at 5°C, after the adhesive sheet cut in the same manner as above was allowed to stand for 1 hour under a temperature of 5°C, the temporary support was peeled off, and then was subjected to the tensile test at 5°C to obtain a stress-strain curve. A stress per unit area at 10% elongation of the adhesive sheet was set to be 10% modulus at 5°C (5°C -10% modulus).

### ii) 100% Modulus

The adhesive sheet composed of the base layer and the adhesive layer was cut, in a state of the temporary supports being adhered, to a piece of 1 cm width and 13 cm length, and then the temporary support 1 and the temporary support 2 were peeled off. The piece was subjected to tensile test by using a tensile tester "AUTOGRAPH ASG-50D Type" (manufactured by SHIMADZU CORPORATION) under a tensile speed of 200 mm/mi., distance between chucks of 50mm, room temperature (20°C) to obtain a stress-strain curve. A stress per unit area at 100% elongation of the adhesive sheet was set to be 100% modulus at 20°C (RT-100 % modulus).

### iii) Breaking strength

The adhesive sheet composed of the base layer and the adhesive layer was cut, in a state of the temporary supports being adhered, to a piece of 1 cm width and 13 cm length, and then the temporary support 1 and the temporary support 2 were peeled off. The piece was subjected to tensile test by using a tensile tester "AUTOGRAPH ASG-50D Type" (manufactured by SHIMADZU CORPORATION) under a tensile speed of 200 mm/mi., distance between chucks of 50mm, room temperature (20°C) to determine a force at the time when the adhesive sheet was broken.

### (2) Adhesive strength

The adhesive sheet composed of the base layer and the adhesive layer was cut, in a state of the temporary supports being adhered, to a piece of 1 cm width and 13 cm length, and then the temporary support 1 and the temporary support 2 were peeled off. The adhesive layer of the adhesive sheet was adhered under pressure to a methacrylate plate (ACRYLITE manufactured by MITSUBISHI RAYON CO. , LTD.) washed with isopropyl alcohol by applying 2 kg pressure one round trip. After being allowed to stand for 1 hour, a stress when peeling at a tensile speed of 300 mm/min. in the direction at an angle of 180 degrees was measured, and was set to be an adhesive strength.

### (3) Evaluation of adhesion property to vinyl chloride sol

The adhesive sheet composed of the base layer and the adhesive layer, or the adhesive sheet composed of the base layer, the adhesive layer and the application sheet was cut, in the state of the temporary supports being adhered, to a piece of 1 cm width and 13 cm length, and then the temporary support 1 and the temporary support 2 were peeled off. The piece was adhered on a panel of vinyl chloride sol (surface roughness = 11.4 µm) by using a hand roller. The adhesion state was observed by visual judgement, and evaluated under the following evaluation standard. The evaluation was conducted under two conditions, i.e. at room temperature (20°C) and at 5°C. In case where the aforementioned adhesion work was carried out at room temperature (20°C), the resulting adhesion property was set to be the adhesion property to vinyl chloride sol at 20°C (RT), and in case where, after cutting and being allowed to stand for 1 hour at 5°C, the adhesion work was carried out under a condition of 5°C, the resulting adhesion property was set to be the adhesion property to vinyl chloride sol at 5°C.

### Evaluation Criterion:

A Floating of the adhesive sheet is not observed
B Floating of the adhesive sheet is partly observed
C Floating of the adhesive sheet is widely observed

### (4) Evaluation of ease of laminating

In the aforementioned " (3) Evaluation of adhesion property to vinyl chloride sol", when the adhesive sheet was laminated to the vinyl chloride sol panel in the finely straight line, the evaluation was represented by "○", and when adhered in winding, the evaluation was represented by "×"_{.}

### (5) Measurement of adhesion strength of application sheet

The adhesive sheet composed of the base layer, the adhesive layer and the application sheet was cut, in the state of the temporary supports being adhered, to a piece of 25 cm width and 13 cm length, and then the temporary support 1 and the temporary support 2 were peeled off. The adhesive layer of the adhesive sheet was adhered under pressure to a methacrylate plate (ACRYLITE manufactured by MITSUBISHI RAYON CO., LTD.) washed with isopropyl alcohol by using a hand roller. After being allowed to stand for 1 hour at room temperature (20°C), a stress when peeling the application sheet at a tensile speed of 300 mm/min. in the direction at an angle of 180 degrees was measured, and was set to be an adhesion strength of the application sheet.

### (6) Evaluation of ease of peeling-off of application sheet

The adhesive sheet was adhered under pressure to the methacrylate plate (ACRYLITE manufactured by MITSUBISHI RAYON CO., LTD.) washed with isopropyl alcohol in the same manner as in the aforementioned " (5) Measurement of adhesion strength of application sheet". After being allowed to stand for 1 hour at room temperature (20°C), the application sheet was peeled with a hand. When the application sheet was peeled off easily, the evaluation was represented by "○", and when peeling is heavy and difficult, the evaluation was represented by "×".

### (EXAMPLE 1)

### <<Preparation of coating solution for composite films>>

In a reactor equipped with a condenser, a thermometer, and an agitator were supplied 5 parts of acrylic acid (AA), 35.5 parts of isobornyl acrylate (IBXA), and 9.5 parts of n-butyl acrylate (BA) as acrylic-based monomers, 36.4 parts of polyoxytetramethylene glycol (PTMG) (number-average molecular weight 650, manufactured by Mitsubishi Chemical Corporation) as a polyol, and while agitating, 13.6 parts of hydrogenated xylylene diisocyanate (HXDI) was dripped and the mixture was allowed to react at 65°C for 10 hours. After that, 2 parts of 4-hydroxybutyl acrylate was dripped and allowed to react at 65°C for 1 hour to obtain a urethane polymer - acrylic-based monomer mixture.

After that, a mixture of a urethane polymer and an acrylic-based monomer (coating solution for composite film) was prepared by adding 3 parts of trimethylolpropane triacrylate as a cross-linking agent, and adding 0.15 part of bis(2,4,6-trimethylbenzoyl)-phenylphosphine oxide ("IRGACURE 819" manufactured by CIBA JAPAN) as a photopolymerization initiator, 1.25 part of a ultraviolet absorber of 1-methoxy-2-propanol and a reaction product of 2-(4,6-bis(2,4-dimethylphenyl)-1,3,5-triazine-2-yl)-5-hdroxyphenyl and oxirane [(C10-C16, mainly C12-C13 alkyloxy) methyl oxirane] ("TINUVIN 400" manufactured by CIBA JAPAN) as a ultraviolet absorber, and 1.25 part of a reaction product of decanedionic bis(2,2,6,6-tetramethyl-1-(octyloxy)-4-piperidyl) ester, 1,1-dimethylethylhydroperoxide and octane ("TINUVIN 123" manufactured by CIBA JAPAN) as a light stabilizer.

### «Preparation of coating solution for surface coating layers»

A coating solution for coating layers (solid content 28%) was prepared by adding 10.15 parts of an isocyanate cross-linking agent ("COLONATE HX" manufactured by NIPPON POLYURETHANE INDUSTRY CO., LTD.) as a curing agent, 3.5 parts of a xylene-diluted solution (solid content of 0.01%) of dibutyltin laurate as a catalyst, and 101 parts of toluene as a dilute solvent relative to 100 parts of a solution of a fluoroethylene vinyl ether in toluene and xylene ("LF600" manufactured by ASAHI KASEI CORPORATON, solid content 50%).

### <<<Preparation of base layers>>

The coating solution for surface coating layers obtained was applied to a peeling-treated polyethylene terephthalate film (75 µm thick) as a temporary support 1, dried and cured at 140°C for 3 minutes to form a fluoroethylene vinyl ether layer. The thickness of this surface coating layer after drying was 10 µm.

The coating solution for composite films obtained was applied to the surface coating layer obtained so that a thickness after curing was 290 µm (300 µm including the thickness of the surface coating layer), and then, a peeling-treated polyethylene terephthalate (PET) film as a separator was laminated thereon. The surface of PET film was irradiated with ultraviolet ray for curing (illuminance 290 mW/cm², light amount 4,600 mJ/cm²) by using a metal halide lamp to form the composite film (provided with the surface coating layer) on the temporary support 1. Subsequently, after peeling off the peeling-treated polyethylene terephthalate film (separator), a base layer was formed by drying at 140°C for 3 minutes to dry the residual unreacted acrylic-based monomer.

### «Preparation of adhesive layers»

0.05 part of "IRGACURE 651" trade name (manufactured by CIBA JAPAN) and 0.05 part of "IRGACURE 184" trade name (manufactured by CIBA JAPAN) as photopolymerization initiators were blended with a mixture of 90 parts of 2-ethylhexylacrylate and 10 parts of acrylic acid as monomer components, which was then irradiated with ultraviolet ray until its viscosity was about 15 Pa·s (BH viscometer No. 5 rotor, 10 rpm, measuring temperature 30°C) to produce a partially polymerized acrylic composition (UV syrup).

An adhesive composition was manufactured by adding 0.08 part of hexanediol diacrylate and 1 part of a hindered phenol type antioxidant (trade name "IRGANOX 1010" manufactured by CIBA JAPAN) relative to 100 parts of the UV syrup obtained.

The adhesive composition was applied to the peeling-treated surface of a polyester film of 38 µm thick as a temporary support 2 so that a thickness of the final product was 50 µm.
A peeling-treated PET film was laminated thereon as a separator, and then, the surface of PET film was irradiated with ultraviolet ray for curing (illuminance 290 mW/cm², light amount 4,600 mJ/cm²) by using a metal halide lamp to form an adhesive layer on the temporary support 2. Subsequently, after peeling off the peeling-treated PET film, an adhesive layer was formed by drying at 140°C for 3 minutes to dry the residual unreacted acrylic-based monomer.

### «Production of adhesive sheets»

The adhesive layer was adhered so as to overlap with the surface of the substrate layer obtained, being opposite to the surface where the surface coating layer was provided, to thereby produce an adhesive sheet for protecting coating films (layer structure of temporary support 1 / surface coating layer / composite film / adhesive layer / temporary support 2).

### «Measurement and evaluation»

The adhesive sheet thus obtained was measured and evaluated according to the aforementioned measuring methods and evaluation methods, with respect to modulus values (10% modulus at 20°C, 100% modulus at 20°C, breaking strength at 20°C, 10% modulus at 5°C), adhesive strength, adhesion to vinyl chloride sol, ease of lamination. The results are shown in TABLE 1.

### (EXAMPLE 2)

The adhesive sheet was produced in the same manner as in EXAMPLE 1 except that the coating solution for composite films was changed with the following.

### «Preparation of coating solution for composite films»

In a reactor equipped with a condenser, a thermometer, and an agitator were supplied 8.8 parts of acrylic acid (AA) and 31.2 parts of isobornyl acrylate (IBXA) as acrylic-based monomers, 43.7 parts of polyoxytetramethylene glycol (PTMG) (number-average molecular weight 650, manufactured by Mitsubishi Chemical Corporation) as a polyol, and while agitating, 16.3 parts of hydrogenated xylylene diisocyanate (HXDI) was dripped and the mixture was allowed to react at 65°C for 10 hours. Subsequently, 2 parts by weight of 2-hydroxyethyl acrylate was dripped and allowed to react at 65°C for 1 hour to obtain a urethane polymer - acrylic-based monomer mixture.

After that, a mixture of a urethane polymer and an acrylic-based monomer (coating solution for composite film) was obtained by adding 0.12 part of bis(2,4,6-trimethylbenzoyl)-phenylphosphine oxide ("IRGACURE 819" manufactured by CIBA JAPAN) as a photopolymerization initiator, 1.25 part of 2,5-hydroxyphenyl and oxirane 1-methoxy-2-propanol ("TINUVIN 400" manufactured by CIBA JAPAN) as a ultraviolet absorber, and 1.25 part of a hindered amine light stabilizer of decanedioic acid bisester, 1,1-dimethylethylhydroperoxide and octane ("TINUVIN 123" manufactured by CIBA JAPAN) as a light stabilizer.

The thus obtained adhesive sheet was subjected to measurements and evaluations in the same manner as in EXAMPLE 1. The results are shown in TABLE 1.

### (EXAMPLE 3)

The adhesive sheet was produced in the same manner as in EXAMPLE 1 except that the coating solution for composite films was changed with the following.

### «Preparation of coating solution for composite films»

In a reactor equipped with a condenser, a thermometer, and an agitator were supplied 6.5 parts of acrylic acid (AA), 28.3 parts of isobornyl acrylate (IBXA), and 8.7 parts of n-butyl acrylate (BA) as acrylic-based monomers, 32.5 parts of polyoxytetramethylene glycol (PTMG) (number-average molecular weight 650, manufactured by Mitsubishi Chemical Corporation), and 1.5 parts of 1,4-butanediol as polyols, and while agitating, 22.5 parts of hydrogenated xylylene diisocyanate (HXDI) was dripped and the mixture was allowed to react at 65°C for 10 hours. Subsequently, 2.7 parts of 2-hydroxyethyl acrylate was dripped and allowed to react at 65°C for 1 hour to obtain a urethane polymer - acrylic-based monomer mixture.

After that, a mixture of a urethane polymer and an acrylic-based monomer (coating solution for composite films) was obtained by adding 0.13 part of bis(2,4,6-trimethylbenzoyl)phenyl-phosphine oxide ("IRGACURE 819" manufactured by CIBA JAPAN) as a photopolymerization initiator, 1.25 part of 2,5-hydroxyphenyl and oxirane 1-methoxy-2-propanol ("TINUVIN 400" manufactured by CIBA JAPAN) as a ultraviolet absorber, and 1.25 part of a hindered amine light stabilizer of decanedioic acid bisester, 1,1-dimethylethylhydroperoxide and octane ("TINUVIN 123" manufactured by CIBA JAPAN) as a light stabilizer. By using this coating solution for composite films, an adhesive sheet was produced.

The adhesive sheet thus obtained was subjected to measurements and evaluations in the same manner as in EXAMPLE 1. The results are shown in TABLE 1.

### (EXAMPLE 4)

The adhesive sheet was produced in the same manner as in EXAMPLE 1 except that the coating solution for composite films was changed with the following.

### «Preparation of coating solution for composite films»

In a reactor equipped with a condenser, a thermometer, and an agitator were supplied 10 parts of acrylic acid (AA), 20 parts of acryloylmorphorine (ACMO), and 20 parts of n-butyl acrylate (BA) as acrylic-based monomers, 36.4 parts of polyoxytetramethylene glycol (PTMG) (number-average molecular weight 650, manufactured by Mitsubishi Chemical Corporation) as a polyol, and while agitating, 13.6 parts of hydrogenated xylylene diisocyanate (HXDI) was dripped and the mixture was allowed to react at 65°C for 10 hours to obtain a urethane polymer - acrylic-based monomer mixture.

After that, a mixture of a urethane polymer and an acrylic-based monomer (coating solution for composite film) was obtained by adding 0.13 part of bis(2,4,6-trimethylbenzoyl)phenyl-phosphine oxide ("IRGACURE 819" manufactured by CIBA JAPAN) as a photopolymerization initiator, 1.25 part of 2,5-hydroxyphenyl and oxirane 1-methoxy-2-propanol ("TINUVIN 400" manufactured by CIBA JAPAN) as a ultraviolet absorber, and 1.25 part of a hindered amine light stabilizer of decanedioic acid bisester, 1,1-dimethylethylhydroperoxide and octane ("TINUVIN 123" manufactured by CIBA JAPAN) as a light stabilizer.

The adhesive sheet thus obtained was subjected to measurements and evaluations in the same manner as in EXAMPLE 1. The results are shown in TABLE 1.

### (EXAMPLE 5)

The adhesive sheet was produced in the same manner as in EXAMPLE 1 except that the coating solution for composite films was changed with the following.

### «Preparation of coating solution for composite films»

In a reactor equipped with a condenser, a thermometer, and an agitator were supplied 7.5 parts of acrylic acid (AA), 32.5 parts of isobornyl acrylate (IBXA), and 10 parts of n-butyl acrylate (BA) as acrylic-based monomers, 26.5 parts of polyoxytetramethylene glycol (PTMG) (number-average molecular weight 650, manufactured by Mitsubishi Chemical Corporation), and 3.7 parts of 1,4-butanediol as polyols, and while agitating, 19.8 parts of hydrogenated xylylene diisocyanate (HXDI) was dripped and the mixture was allowed to react at 65°C for 10 hours. Subsequently, 2.4 parts of 2-hydroxyethyl acrylate was dripped and allowed to react at 65°C for 1 hour to obtain a urethane polymer - acrylic-based monomer mixture.

After that, a mixture of a urethane polymer and an acrylic-based monomer (coating solution for composite film) was obtained by adding 0.15 part of bis(2,4,6-trimethylbenzoyl)phenyl-phosphine oxide ("IRGACURE 819" manufactured by CIBA JAPAN) as a photopolymerization initiator, 1.25 part of 2,5-hydroxyphenyl and oxirane 1-methoxy-2-propanol ("TINUVIN 400" manufactured by CIBA JAPAN) as a ultraviolet absorber, and 1.25 part of a hindered amine light stabilizer of decanedioic acid bisester, 1,1-dimethylethylhydroperoxide and octane ("TINUVIN 123" manufactured by CIBA JAPAN) as a light stabilizer.

The adhesive sheet thus obtained was subjected to measurements and evaluations in the same manner as in EXAMPLE 1. The results are shown in TABLE 1.

### (EXAMPLE 6)

The adhesive sheet was produced in the same manner as in EXAMPLE 1 except that the coating solution for composite films was changed with the following.

### «Preparation of coating solution for composite films»

In a reactor equipped with a condenser, a thermometer, and an agitator were supplied 6.3 parts of acrylic acid (AA), 27.5 parts of isobornyl acrylate (IBXA), and 8.4 parts of n-butyl acrylate (BA) as acrylic-based monomers, 26.7 parts of polyoxytetramethylene glycol (PTMG) (number-average molecular weight 650, manufactured by Mitsubishi Chemical Corporation), and 3.6 parts of 1,4-butanediol as polyols, and while agitating, 27.5 parts of hydrogenated xylylene diisocyanate (HXDI) was dripped and the mixture was allowed to react at 65°C for 10 hours. Subsequently, 3.3 parts of 2-hydroxyethyl acrylate was dripped and allowed to react at 65°C for 1 hour to obtain a urethane polymer - acrylic-based monomer mixture.

After that, a mixture of a urethane polymer and an acrylic-based monomer (coating solution for composite films) was obtained by adding 0.13 part of bis(2,4,6-trimethylbenzoyl)phenyl-phosphine oxide ("IRGACURE 819" manufactured by CIBA JAPAN) as a photopolymerization initiator, 1.25 part of 2,5-hydroxyphenyl and oxirane 1-methoxy-2-propanol ("TINUVIN 400" manufactured by CIBA JAPAN) as a ultraviolet absorber, and 1.25 part of a hindered amine light stabilizer of decanedioic acid bisester, 1,1-dimethylethylhydroperoxide and octane ("TINUVIN 123" manufactured by CIBA JAPAN) as a light stabilizer.

The adhesive sheet thus obtained was subjected to measurements and evaluations in the same manner as in EXAMPLE 1. The results are shown in TABLE 1.

### (EXAMPLE 7)

The adhesive sheet was produced in the same manner as in EXAMPLE 1 except that a urethane base material (ESMAR URS-PXN manufactured by NIPPON MATI) (30 µm) was used as the surface coating layer instead of the fluoroethylene vinyl ether layer, and the thickness of the composite film was modified so as to be 300 µm thick of the base layer.
The adhesive sheet thus obtained was subjected to measurements and evaluations in the same manner as in EXAMPLE 1. The results are shown in TABLE 1.

### (EXAMPLE 8)

The adhesive sheet was prepared in the same manner as in EXAMPLE 1, without being provided with a surface coating layer, by applying the coating solution for composite films to a peeling-treated PET film.

The adhesive sheet thus obtained was subjected to measurements and evaluations in the same manner as in EXAMPLE 1. The results are shown in TABLE 1.

### (COMPARATIVE EXAMPLE 1)

The adhesive sheet was produced in the same manner as in EXAMPLE 1 except that the coating solution for composite films was changed with the following.

### <Preparation of coating solution for composite films>>

In a reactor equipped with a condenser, a thermometer, and an agitator were supplied 6.3 parts of acrylic acid (AA), 27.1 parts of isobornyl acrylate (IBXA), and 8.4 parts of n-butyl acrylate (BA) as acrylic-based monomers, 25.9 parts of polyoxytetramethylene glycol (PTMG) (number-average molecular weight 650, manufactured by Mitsubishi Chemical Corporation), and 3.5 parts of 1,4-butanediol as polyols, and while agitating, 28.8 parts of hydrogenated xylylene diisocyanate (HXDI) was dripped and the mixture was allowed to react at 65°C for 10 hours. After that, 4.5 parts of 2-hydroxyethyl acrylate was dripped and allowed to react at 65°C for 1 hour to obtain a urethane polymer - acrylic-based monomer mixture.

After that, a mixture of a urethane polymer and an acrylic-based monomer (coating solution for composite film) was obtained by adding 0.12 part of bis(2,4,6-trimethylbenzoyl)phenyl-phosphine oxide ("IRGACURE 819" manufactured by CIBA JAPAN) as a photopolymerization initiator, 1.25 part of 2,5-hydroxyphenyl and oxirane 1-methoxy-2-propanol ("TINUVIN 400" manufactured by CIBA JAPAN) as a ultraviolet absorber, and 1.25 part of a hindered amine light stabilizer of decanedioic acid bisester, 1,1-dimethylethylhydroperoxide and octane ("TINUVIN 123" manufactured by CIBA JAPAN) as a light stabilizer.

The adhesive sheet thus obtained was subjected to measurements and evaluations in the same manner as in EXAMPLE 1. The results are shown in TABLE 1.

### (COMPARATIVE EXAMPLE 2)

The adhesive sheet was produced in the same manner as in EXAMPLE 1 except that the coating solution for composite films was changed with the following.

### «Preparation of coating solution for composite films»

In a reactor equipped with a condenser, a thermometer, and an agitator were supplied 7.5 parts of acrylic acid (AA), 19.8 parts of isobornyl acrylate (IBXA), and 17.7 parts of n-butyl acrylate (BA) as acrylic-based monomers, 37.1 parts of polyoxytetramethylene glycol (PTMG) (number-average molecular weight 650, manufactured by Mitsubishi Chemical Corporation), and 1.7 parts of 1,4-butanediol as polyols, and while agitating, 16.2 parts of hydrogenated xylylene diisocyanate (HXDI) was dripped and the mixture was allowed to react at 65°C for 10 hours to obtain a urethane polymer - acrylic monomer-based mixture.

After that, a mixture of a urethane polymer and an acrylic-based monomer (coating solution for composite film) was obtained by adding 0.14 part of bis(2,4,6-trimethylbenzoyl)phenyl-phosphine oxide ("IRGACURE 819" manufactured by CIBA JAPAN) as a photopolymerization initiator, 1.25 part of 2,5-hydroxyphenyl and oxirane 1-methoxy-2-propanol ("TINUVIN 400" manufactured by CIBA JAPAN) as a ultraviolet absorber, and 1.25 part of a hindered amine light stabilizer of decanedioic acid bisester, 1,1-dimethylethylhydroperoxide and octane ("TINUVIN 123" manufactured by CIBA JAPAN) as a light stabilizer.

The adhesive sheet thus obtained was subjected to measurements and evaluations in the same manner as in EXAMPLE 1. The results are shown in TABLE 1.

**[TABLE 1]**

| | | Ex.1 | Ex.2 | Ex.3 | Ex.4 | Ex.5 | Ex.6 | Ex.7 | Ex.8 | Com.Ex. 1 | Com.Ex. 2 |
|---|---|---|---|---|---|---|---|---|---|---|---|
| Modulus [N/cm] | RT-10% | 7.3 | 3.7 | 10.6 | 14.9 | 14.5 | 27.8 | 5.4 | 4.9 | 39.4 | 3.4 |
| | RT-100% | 18.2 | 8.9 | 26.8 | 19.8 | 24.0 | 44.7 | 17.4 | 17.1 | 58.4 | 4.9 |
| | RT-breake | 80.0 | 58.0 | 50.4 | 98.7 | 100.0 | 81.7 | 83.6 | 75.7 | 110.0 | 9.9 |
| | 5°C-10% | 21.0 | 14.9 | 46.5 | 29.5 | 84.5 | 89.0 | 17.8 | 19.5 | 99.9 | 6.5 |
| Adhesive strength [N/cm] | | 11.8 | 10.4 | 17.6 | 10.6 | 21.4 | 18.5 | 12.0 | 4.3 | 18.6 | 6.3 |
| Adhesion property to vinyl chloride sol | RT | A | A | A | A | A | A | A | A | C | A |
| | 5°C | A | A | A | A | C | C | A | A | C | A |
| Ease of lamination | RT | ○ | ○ | ○ | ○ | ○ | ○ | ○ | ○ | ○ | × |
| | 5°C | ○ | ○ | ○ | ○ | ○ | ○ | ○ | ○ | ○ | ○ |

| | | | | | | | | | | | |
|---|---|---|---|---|---|---|---|---|---|---|---|
| Notice) RT:20°C | | | | | | | | | | | |

As is obvious from TABLE 1, it has been found that the adhesive sheets according to EXAMPLEs 1 to 8 composed of the base material and the adhesive layer, and having a 10% modulus of 35 N/cm or less and a 100% modulus of 8 N/cm or more have excellent flexibility, and are excellent in flexibility for curved surface and for convex and concave surface in vinyl chloride sol coating portion, and further are easy to be laminated at the time of lamination work. It has been found that the adhesive sheets according to EXAMPLEs 1 to 4, 7 to 8 are excellent in adhesion to the vinyl chloride sol at a low temperature. It has been found that those have excellent breaking strength. Those adhesive sheets had adhesive strength of 3 N/cm or more.

Meanwhile, it has been found that the adhesive sheet according to COMPARATIVE EXAMPLE 1 composed of the base material and the adhesive layer, and having a 10% modulus of 35 N/cm or more is remarkably inferior in adhesion to the vinyl chloride sol in each case at room temperature and at a low temperature. It has been found that the adhesive sheet according to COMPARATIVE EXAMPLE 2 having a 100% modulus of less than 8 N/cm has a weak breaking strength and is at a practically unavailable level, and further is inferior in the evaluation of ease of lamination at 20°C.

### (EXAMPLE 9)

An adhesive sheet was produced by laminating an application sheet ("SPV-214" manufactured by NITTO DENKO CO,. LTD.) on the surface coating layer of the adhesive sheet obtained in EXAMPLE 1.

Namely, a fluoroethylene vinyl ether layer was formed by applying the coating solution for surface coating layer prepared in the same manner as in EXAMPLE 1 on the temporary support 1, and dried and cured at 140°C for 3 minutes. The thickness of the surface coating layer after drying was 10µm. A base layer (provided with the surface coating layer) was obtained by applying, in the same manner as in EXAMPLE 1, the coating solution for composite films prepared in the same manner as in EXAMPLE 1 on the surface coating layer thus obtained to form a composite film. Further on the composite film, an adhesive layer produced in the same manner as in EXAMPLE 1 was laminated.
Next, after peeling off the temporary support 1 which was temporarily adhered on the base layer, an application sheet ("SPV-214" manufactured by NITTO DENKO CO, . LTD.) was laminated on the surface of the surface coating layer to produce an adhesive sheet (layer construction of application sheet / surface coating layer / composite film / adhesive layer / temporary support 2).

### <<Measurement and Evaluation>>

With respect to the adhesive sheets obtained, the measurements and evaluations of moduli (10% modulus at 20°C, 10% modulus at 5°C), adhesion property to vinyl chloride sol, ease of lamination, adhesion strength of application sheet, and ease of peeling off of application sheet were conducted according to the aforementioned measurement methods and evaluation methods. The results are shown in TABLE 2.

### (EAMPLE 10)

An adhesive sheet having the application sheet was produced in the same manner as in EXAMPLE 9 except that the adhesive sheet was changed with the adhesive sheet produced in the EXAMPLE 2.
The adhesive sheet thus obtained was subjected to measurements and evaluations in the same manner as in EXAMPLE 9. The results are shown in TABLE 2.

### (EAMPLE 11)

An adhesive sheet having the application sheet was produced in the same manner as in EXAMPLE 9 except that the adhesive sheet was changed with the adhesive sheet produced in the EXAMPLE 3.
The adhesive sheet thus obtained was subjected to measurements and evaluations in the same manner as in EXAMPLE 9. The results are shown in TABLE 2.

### (EAMPLE 12)

An adhesive sheet having the application sheet was produced in the same manner as in EXAMPLE 9 except that the adhesive sheet was changed with the adhesive sheet produced in the EXAMPLE 4.
The adhesive sheet thus obtained was subjected to measurements and evaluations in the same manner as in EXAMPLE 9. The results are shown in TABLE 2.

### (EAMPLE 13)

An adhesive sheet having the application sheet was produced in the same manner as in EXAMPLE 9 except that the adhesive sheet was changed with the adhesive sheet produced in the EXAMPLE 5.
The adhesive sheet thus obtained was subjected to measurements and evaluations in the same manner as in EXAMPLE 9. The results are shown in TABLE 2.

### (EXAMPLE 14)

The adhesive sheet having an application sheet was produced in the same manner as in EXAMPLE 13 except that the coating solution for composite films was changed with the following.

### «Preparation of coating solution for composite films»

In a reactor equipped with a condenser, a thermometer, and an agitator were supplied 7.5 parts of acrylic acid (AA), 19. 8 parts of isobornyl acrylate (IBXA), and 17.7 parts of n-butyl acrylate (BA) as acrylic-based monomers, 37.1 parts of polyoxytetramethylene glycol (PTMG) (number-average molecular weight 650, manufactured by Mitsubishi Chemical Corporation), and 1.7 parts of 1,4-butanediol as polyols, and while agitating, 16.2 parts of hydrogenated xylylene diisocyanate (HXDI) was dripped and the mixture was allowed to react at 65°C for 10 hours to obtain a urethane polymer - acrylic-based monomer mixture.

After that, a mixture of a urethane polymer and an acrylic-based monomer (coating solution for composite films) was prepared by adding 0.14 part of bis(2,4,6-trimethylbenzoyl)phenyl-phosphine oxide ("IRGACURE 819" manufactured by CIBA JAPAN) as a photopolymerization initiator, 1.25 part of 2,5-hydroxyphenyl and oxirane 1-methoxy-2-propanol ("TINUVIN 400" manufactured by CIBA JAPAN) as a ultraviolet absorber, and 1.25 part of a hindered amine light stabilizer of decanedioic acid bisester, 1,1-dimethylethylhydroperoxide and octane ("TINUVIN 123" manufactured by CIBA JAPAN) as a light stabilizer.

The adhesive sheet thus obtained was subjected to measurements and evaluations in the same manner as in EXAMPLE 13. The results are shown in TABLE 1.

### (EXAMPLE 15)

A adhesive sheet was produced by laminating an application sheet ("SPV-214" manufactured by NITTO DENKO CO, . LTD.) on the opposite side of the adhesive layer of the adhesive sheet produced in the same manner as in EXAMPLE 8.
The adhesive sheet thus obtained was subjected to measurements and evaluations in the same manner as in EXAMPLE 13. The results are shown in TABLE 1.

### (COMPARATIVE EXAMPLE 3)

The adhesive sheet having an application sheet was produced in the same manner as in EXAMPLE 9 except that the coating solution for composite films was changed with the following.

### «Preparation of coating solution for composite films»

In a reactor equipped with a condenser, a thermometer, and an agitator were supplied 6.3 parts of acrylic acid (AA), 27.5 parts of isobornyl acrylate (IBXA) , and 8.4 parts of n-butyl acrylate (BA) as acrylic-based monomers, 26.7 parts of polyoxytetramethylene glycol (PTMG) (number-average molecular weight 650, manufactured by Mitsubishi Chemical Corporation), and 3.6 parts of 1,4-butanediol as polyols, and while agitating, 27.5 parts of hydrogenated xylylene diisocyanate (HXDI) was dripped and the mixture was allowed to react at 65°C for 10 hours. Subsequently, 3.3 parts of 2-hydroxyethyl acrylate was dripped and allowed to react at 65°C for 1 hour to obtain a urethane polymer - acrylic-based monomer mixture.

After that, a mixture of a urethane polymer and an acrylic-based monomer (coating solution for composite films) was prepared by adding 0.13 part of bis(2,4,6-trimethylbenzoyl)phenyl-phosphine oxide ("IRGACURE 819" manufactured by CIBA JAPAN) as a photopolymerization initiator, 1.25 part of 2,5-hydroxyphenyl and oxirane 1-methoxy-2-propanol ("TINUVIN 400" manufactured by CIBA JAPAN) as a ultraviolet absorber, and 1.25 part of a hindered amine light stabilizer of decanedioic acid bisester, 1,1-dimethylethylhydroperoxide and octane ("TINUVIN 123" manufactured by CIBA JAPAN) as a light stabilizer.

The adhesive sheet thus obtained was subjected to measurements and evaluations in the same manner as in EXAMPLE 9. The results are shown in TABLE 2.

### (COMPARATIVE EXAMPLE 4)

The adhesive sheet having an application sheet was produced in the same manner as in COMPARATIVE EXAMPLE 3 except that the kind of the application sheet was changed with "SPV-3620" manufactured by NITTO DENKO CO,. LTD. The adhesive sheet thus obtained was subjected to measurements and evaluations in the same manner as in EXAMPLE 9. The results are shown in TABLE 2.

**[TABLE 2]**

| | | EX.9 | EX.10 | EX.11 | EX.12 | Ex.13 | EX.14 | EX.15 | Com.Ex. 3 | Com.Ex. 4 |
|---|---|---|---|---|---|---|---|---|---|---|
| Modulus [N/cm] | RT-10% | 22.0 | 20.3 | 30.5 | 28.9 | 33.5 | 18.8 | 20.0 | 77.56 | 74.4 |
| | 5°C-10% | 46.5 | 43.4 | 51.6 | 88.6 | 114.6 | 30.6 | 43.4 | 156.2 | 130.9 |
| Adhesion property to vinyl chloride sol | RT | A | A | A | A | A | A | A | C | C |
| | 5°C | A | A | A | C | C | A | A | C | C |
| Ease of lamination | RT | ○ | ○ | ○ | ○ | ○ | ○ | ○ | ○ | ○ |
| | 5°C | ○ | ○ | ○ | ○ | ○ | ○ | ○ | ○ | ○ |
| Adhesive strength of application sheet [N/25mm] | | 1.8 | 1.8 | 1.0 | 1.2 | 1.2 | 1.4 | 2.0 | 1.5 | 6.5 |
| Ease of peeling off of application sheet | | ○ | ○ | ○ | ○ | ○ | ○ | ○ | ○ | × |

| | | | | | | | | | | |
|---|---|---|---|---|---|---|---|---|---|---|
| Notice) RT:20°C | | | | | | | | | | |

As is obvious from TABLE 2, the adhesive sheets according to EXAMPLEs 9 to 15 composed of the base material, the adhesive layer and the application sheet, and having a 10% modulus at 20°C of 35 N/cm or less had adhesion properties of 6 N/25 mm or less, and were able to be peeled off easily after the completion of positioning work. In addition, it has been found that those are good in adhesion to vinyl chloride sol at 20°C. Furthermore, it has been found that excellent results can be obtained in the evaluations of the ease of lamination to vinyl chloride sol and the ease of peeling off of application sheet.

Meanwhile, it has been found that the adhesive sheets according to COMPARATIVE EXAMPLEs 3 and 4 having a 10% modulus of more than 35 N/25 mm at 20°C are inferior in adhesion to the vinyl chloride sol in each case at room temperature and at a low temperature, and in COMPARATIVE EXAMPLE 4, the adhesion strength of the application sheet is more than 6 N/25 mm, and peeling off of the application sheet is not easy.

According to the present invention, an adhesive sheet for protecting coating films having excellent flexibility was able to be provided. According to the present invention, an adhesive sheet having flexibility for curved surface and flexibility for convex and concave surface in vinyl chloride sol coating portion was able to be provided.

### INDUSTRIAL APPLICABILITY

The adhesive sheet for protecting coating films according to the present invention can be used suitably as an adhesive sheet to which flexibility for a curved surface and the like is required. It can be used, for example, as an adhesive sheet for protecting surfaces of a coating film which is exposed under harmful environment including weather in outdoor, solvents, dusts, fats, ocean environments, and the like. Further, it is also suitable as an adhesive sheet for protecting coating films of automobiles.

## Claims

1. An adhesive sheet for protecting coating films comprising an adhesive layer and a base layer provided with a composite film containing at least a urethane polymer, wherein the adhesive sheet has a 10% modulus of 35 N/cm or less at 20°C, and has a 100% modulus of 8 N/cm or more at 20°C.

2. The adhesive sheet for protecting coating films according to Claim 1, wherein a breaking strength of the adhesive sheet for protecting coating films is 40 N/cm or more.

3. The adhesive sheet for protecting coating films according to any one of Claim 1 or 2, wherein a 10% modulus at 5°C of the adhesive sheet for protecting coating films is 80 N/cm or less.

4. The adhesive sheet for protecting coating films according to any one of Claims 1 to 3, wherein the composite film comprises a (meth) acrylic-based polymer and a urethane polymer.

5. The adhesive sheet for protecting coating films according to any one of Claims 1 to 4, wherein the base layer has a surface coating layer containing fluorine or urethane on a surface being opposite to the surface where the adhesive layer is provided.

6. An adhesive sheet for protecting coating films comprising an application sheet, an adhesive layer, and a base layer provided with a composite film containing at least a urethane polymer, wherein a 10% modulus of the adhesive sheet is 35 N/cm or less at 20°C.

7. The adhesive sheet for protecting coating films according to Claim 6, wherein a 10% modulus of the adhesive sheet is 80 N/cm or less at 5°C.

8. The adhesive sheet for protecting coating films according to any one of Claim 6 or 7, wherein an adhesive strength between the application sheet and the base layer is 6 N/25 mm or less.

9. The adhesive sheet for protecting coating films according to any one of Claims 6 to 8, wherein the base layer has a surface coating layer containing fluorine or urethane on a surface being opposite to the surface where the adhesive layer is provided.

10. The adhesive sheet for protecting coating films according to any one of Claims 6 to 9, wherein the composite film comprises a (meth) acrylic-based polymer and a urethane polymer.
